# EUROPEAN PATENT APPLICATION

(11) **EP 3 269 905 A1**
(43) Date of publication of application: **17.01.2018**
(21) Application number: 16761474.2
(22) Date of filing: 23.02.2016
(51) Int. Cl.: E05B 49/00, H04Q 9/00

(54) **ELECTRONIC KEY SYSTEM**

(30) Priority: 12.03.2015 JP 2015049655
(71) Applicant: Kabushiki Kaisha Tokai Rika Denki Seisakusho, Ohguchi-cho Niwa-gun Aichi 480-0195 (JP)
(72) Inventor: SENZAKI, Daisuke, Niwa-gun Aichi 480-0195 (JP); KOUNO, Yuuki, Niwa-gun Aichi 480-0195 (JP); KAWAMURA, Masayuki, Niwa-gun Aichi 480-0195 (JP); KOJIMA, Hiroaki, Niwa-gun Aichi 480-0195 (JP)
(74) Representative: TBK
(86) International application number: PCT/JP2016/055200
(87) International publication number: WO 2016/143502

(57) **Abstract**

An electronic key system includes a device (3) that is subject to operation, an electronic key (2) that is authenticatable by the device (3), and a wearable device (4) that is wearable by a user. The wearable device (4) is capable of recognizing an intention communication action of the user. The device (3) authenticates the electronic key (2) and permits a device operation that is associated with the intention communication action of the user recognized by the wearable device (4).

## Description

### TECHNICAL FIELD

The present invention relates to an electronic key system that enables operation of a device after authenticating an electronic key.

### BACKGROUND ART

Patent document 1 discloses an electronic key system that transmits a polling signal from a vehicle to form a communication area. When an electronic key exists in the communication area, the electronic key transmits a response signal to establish wireless communication between the vehicle and the electronic key. After authenticating the electronic key through the wireless communication, the electronic key system enables operation of the vehicle. Such type of an electronic key includes an operation button that instructs operation of the vehicle. When the operation button is operated, a wireless signal is transmitted from the electronic key. The vehicle analyzes the wireless signal, authenticates the electronic key, and performs a vehicle operation in accordance with an operation instruction included in the wireless signal.

### PRIOR ART DOCUMENT

Patent Document 1: Japanese Laid-Open Patent Publication No. 2007-170162

### SUMMARY OF THE INVENTION

### PROBLEMS THAT ARE TO BE SOLVED BY THE INVENTION

To perform a button operation, the electronic key needs to be taken out of a pocket or a bag. This is troublesome. Further, when increasing the types of vehicle operations that can be performed with button operations, the number of operation buttons increases and enlarges the electronic key.

It is an object of the present invention to provide an electronic key system that enables an operation of a device through an intuitive action instead of a button operation.

### MEANS FOR SOLVING THE PROBLEM

An electronic key system according to one aspect of the present invention includes a device that is subject to operation, an electronic key that is authenticatable by the device, and a wearable device that is wearable by a user. The wearable device is capable of recognizing an intention communication action of the user. The device is configured to authenticate the electronic key and permit a device operation associated with the intention communication action of the user recognized by the wearable device.

This configuration allows the device to be operated through an intention communication action of the user using the wearable device. Thus, the device can be operated through an intuitive action instead of a button operation.

### EFFECT OF THE INVENTION

The electronic key system of the present disclosure allows for an operation of the device through an intuitive action instead of a button operation.

### BRIEF DESCRIPTION OF THE DRAWINGS

Fig. 1 is a schematic block diagram showing the configuration of an electronic key system.
Fig. 2 is a schematic diagram showing how a door is unlocked through an intention communication action of a user in a first embodiment.
Fig. 3 is a schematic diagram showing how only a driver seat door is unlocked through an intention communication action of a user in a second embodiment.

### EMBODIMENTS OF THE INVENTION

### First Embodiment

A first embodiment of an electronic key system will now be described.

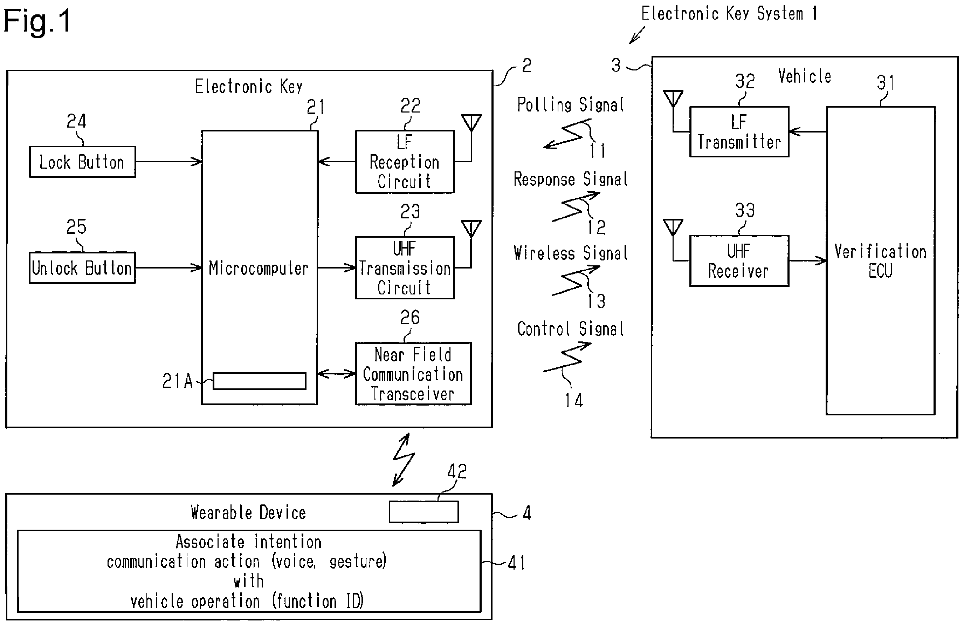

As shown in Fig. 1, an electronic key system 1 includes an electronic key 2 and a vehicle 3, which is one example of a device that is subject to operation. In the first embodiment, bidirectional wireless communication can be performed between the electronic key 2 and the vehicle 3, and unidirectional communication can be directed from the electronic key 2 to the vehicle 3. An LF (low frequency) band radio wave and a UHF (ultrahigh frequency) band radio wave are used for bidirectional wireless communication, and a UHF band radio wave is used for unidirectional wireless communication.

The electronic key 2 includes a microcomputer 21 that centrally controls the electronic key 2, an LF reception circuit 22 that can receive an LF band radio wave, and a UHF transmission circuit 23 that can transmit a UHF band radio wave. When the LF reception circuit 22 receives a polling signal 11, which is an LF band radio wave, the microcomputer 21 transmits a response signal 12 including an ID (identification) unique to the electronic key 2 from the UHF transmission circuit 23.

The electronic key 2 includes a lock button 24 that is operated to instruct locking of the vehicle door and an unlock button 25 that is operated to instruct unlocking of the vehicle door. When the lock button 24 is operated, the microcomputer 21 transmits a wireless signal 13 including the ID of the electronic key 2 and an operation code that instructs locking of the vehicle door from the UHF transmission circuit 23. Further, when the unlock button 25 is operated, the microcomputer 21 transmits the wireless signal 13 including the ID of the electronic key 2 and an operation code that instructs unlocking of the vehicle door from the UHF transmission circuit 23.

The vehicle 3 includes a verification electronic control unit (ECU) 31 that mainly controls security, an LF transmitter 32 that can transmit an LF band radio wave such as the polling signal 11, and a UHF receiver 33 that can receive a UHF band radio wave. The verification ECU 31 is one example of a device controller that performs security control and device control. When the vehicle door is locked, the verification ECU 31 transmits the polling signal 11 from the LF transmitter 32 and forms a communication area around the vehicle 3 in order to monitor the approaching of the electronic key 2. When the UHF receiver 33 receives the response signal 12 after the transmission of the polling signal 11, the verification ECU 31 analyzes the response signal 12 and authenticates the electronic key 2. The verification ECU 31 stores a reference ID that verifies the ID of the electronic key 2. When the ID included in the response signal 12 corresponds to the reference ID, the verification ECU 31 permits unlocking of all of the doors. This allows the user to open the vehicle door through a door handle operation.

In the same manner, when the UHF receiver 33 receives the wireless signal 13, the verification ECU 31 analyzes the wireless signal 13 and authenticates the electronic key 2. When the ID included in the wireless signal 13 corresponds to the reference ID, the verification ECU 31 locks or unlocks the vehicle door in accordance with an operation code (unlocking instruction or locking instruction) that is included in the wireless signal 13.

The electronic key system 1 further includes a wearable device 4 that is wearable by a user. In order to communicate with the wearable device 4, the electronic key 2 includes a near field communication transceiver 26 that can perform near field communication such as BLUETOOTH (registered trademark) or near field communication (NFC).

The wearable device 4 is, for example, smart glasses, a smart watch, or a smart ring. The wearable device 4 includes a recognition unit 41 that can recognize an intention communication action of a user through, for example, a voice or a gesture. The recognition unit 41 includes, for example, a voice recognition unit that recognizes the voice of the user and/or an image recognition unit that recognizes a gesture of the user. Alternatively, the recognition unit 41 may be a touch panel unit. In this case, the touch panel unit recognizes an operation performed by the user on the touch panel as an intention communication action of the user. In the wearable device 4, predetermined specific intention communication actions are associated with device operations (in this example, vehicle operations). When the wearable device 4 recognizes a specific intention communication action, the wearable device 4 transmits a function ID to the electronic key 2 through near field communication. The function ID indicates identification information of the vehicle operation that corresponds to the intention communication action.

When the near field communication transceiver 26 receives a function ID, the microcomputer 21 of the electronic key 2 executes an interruption process and transmits a control signal 14 from the UHF transmission circuit 23 including an operation code that requests for the vehicle operation indicated by the function ID and the ID of the electronic key 2.

When the UHF receiver 33 receives the control signal 14, the verification ECU 31 of the vehicle 3 analyzes the control signal 14 and authenticates the electronic key 2. When the ID included in the control signal 14 corresponds to the reference ID, the verification ECU 31 performs the vehicle operation corresponding to the operation code included in the control signal 14. For example, when the function ID indicates unlocking of the vehicle door, the verification ECU 31 unlocks the vehicle door in response to the operation code that requests for unlocking of the vehicle door.

In BLUETOOTH (registered trademark), one of a master and a slave is generally set in a discoverable state, and a discovery operation is performed by the other one of the master and the slave. When the master and the slave approach each other, a list of discoverable surrounding devices is presented. A desired connection peer is specified from the list. When the same authentication key is input to the master and the slave and the exchange of the authentication key is finished, pairing is completed. Once devices are paired, connection will be automatically or semiautomatically established from the next time without the need for inputting an authentication key.

The operation of the electronic key system 1 will now be described.

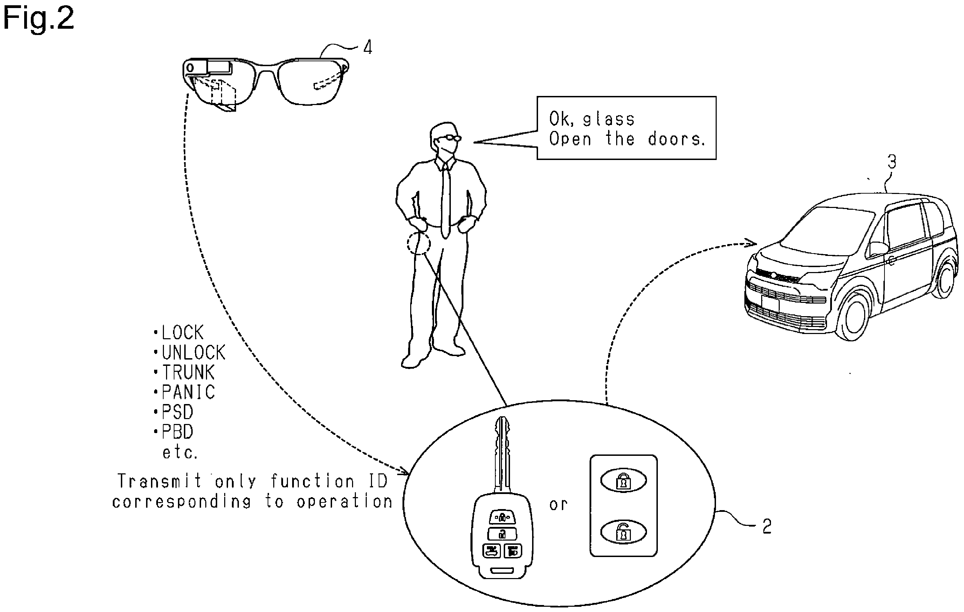

As shown in Fig. 2, when the user who is wearing the wearable device 4 and carrying the electronic key 2 uses his or her voice to express words that instruct unlocking of the vehicle door, the wearable device 4 analyzes the voice. The voice corresponds to an intention communication action that instructs unlocking of the vehicle door.

When the wearable device 4 recognizes the intention communication action that instructs unlocking of the vehicle door, the wearable device 4 transmits the function ID that indicates unlocking of the vehicle door to the electronic key 2 through BLUETOOTH (registered trademark). The vehicle operation specified by the function ID is not limited to unlocking of the vehicle door. Other vehicle operations include, for example, the locking of the vehicle door, the opening of a trunk, the starting of a panic function together with an alarm (activation of horn, intermittent illumination of light, and the like), the starting of a power sliding door (PSD) function, and the starting of a power back door (PBD) function. The function ID corresponding to each vehicle operation is associated with a unique intention communication action.

When the electronic key 2 obtains a function ID from the wearable device 4, the electronic key 2 executes an interruption process and transmits the control signal 14 to the vehicle 3 including the ID of the electronic key 2 and the operation code that instructs the vehicle operation (unlocking of vehicle door) indicated by the function ID. In the first embodiment, the electronic key 2 can perform bidirectional wireless communication with the vehicle 3. However, the electronic key 2 may be a wireless key that does not function to perform bidirectional wireless communication with the vehicle 3. That is, the electronic key 2 only needs to be able to perform at least unidirectional wireless communication directed from the electronic key 2 to the vehicle 3 (device).

When the vehicle 3 obtains the control signal 14 from the electronic key 2, the vehicle 3 analyzes the control signal 14, authenticates the electronic key 2, and unlocks the vehicle door in response to the operation code in the control signal 14.

As described above, the first embodiment has the following advantages.
(1) The vehicle 3 can be operated through an intention communication action of a user through the wearable device 4. This allows the vehicle 3 to be operated through an intuitive action instead of a button operation of the electronic key 2.
(2) Based on a function ID obtained from the wearable device 4, the electronic key 2 requests the vehicle 3 (device) to perform the vehicle operation (device operation) indicated by the function ID. Thus, there is no need for the electronic key 2 to function to recognize an intention communication action of a user. This simplifies the control of the electronic key 2.
(3) When the electronic key 2 obtains a function ID from the wearable device 4, the electronic key 2 executes an interruption process and requests the vehicle 2 (device) to perform the vehicle operation (device operation) indicated by the function ID. In this configuration, priority is given to the operation of the vehicle 3 when a user performs an intention communication action.
(4) The vehicle 3 (device) analyzes the control signal 14 from the electronic key 2, authenticates the electronic key 2, and operates the vehicle 3 in accordance with an instruction received from the control signal 14. In this manner, the electronic key 2 ensures the exchange of signals with the vehicle 3. Thus, convenient functions can be added on while maintaining the security.
(5) The number of buttons of the electronic key 2 can be reduced.
(6) Vehicle operations are specified by device IDs. Thus, the same electronic key 2 can be used for different vehicle types. This allows the same electronic key 2 to be shared by different vehicle types.
(7) Pairing of the wearable device 4 and the electronic key 2 that are usually used by the user allows the vehicle 3 to be operated through an intuitive action instead of direct operation of the electronic key 2.
(8) The wearable device 4 has the function for recognizing an intention communication action. This simplifies the configuration and control of the electronic key 2.
(9) There is no need for the vehicle 3 or the electronic key 2 to include a special sensor or execute a special control. This allows the system to be configured at a low cost.

### Second Embodiment

A second embodiment of an electronic key system will now be described.

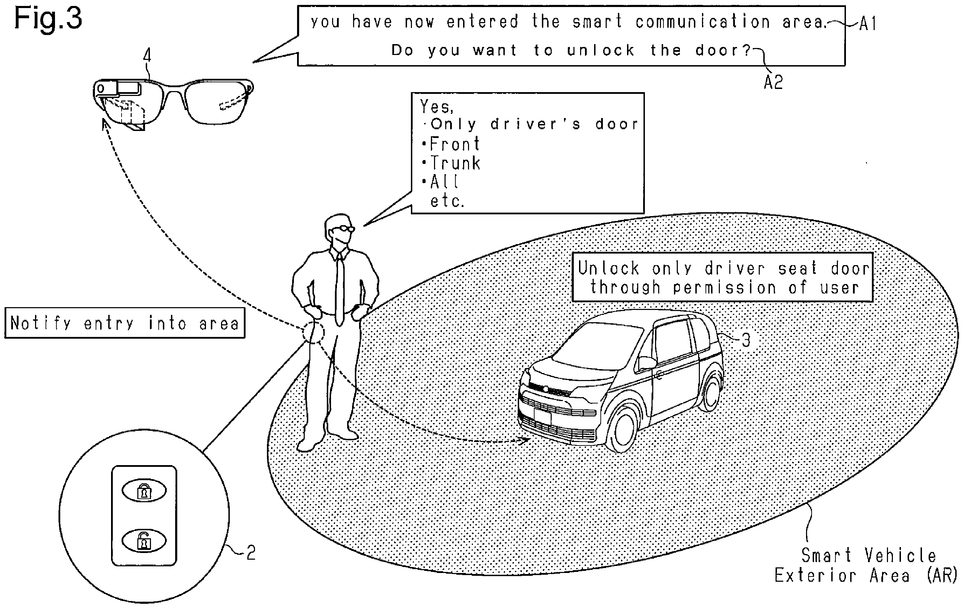

As shown in Fig. 3, when a user wearing the wearable device 4 and carrying the electronic key 2 enters a communication area AR (smart vehicle exterior area) formed by the polling signal 11 of an LF band, the electronic key 2 notifies the wearable device 4 using BLUETOOTH (registered trademark) that the user has entered the communication area AR.

The wearable device 4 includes a messaging unit 42. The messaging unit 42 includes, for example, a voice messaging unit and a display unit. When the wearable device 4 receives an area entry notification from the electronic key 2, the wearable device 4 issues an area entry message A1 for the user with a voice, a display, or the like. Further, when the wearable device 4 receives an area entry notification from the electronic key 2, the wearable device 4 issues a message A2 with the messaging unit 42 requesting the user to permit a vehicle operation. The message A2 may request the user to, for example, select the vehicle operation that is to be permitted. For example, the content of the message A2 is "Do you want to unlock the door?" in Fig. 3.

When the user receives the messages A1 and A2, the user uses, for example, his or her voice to express words that instruct unlocking of only the driver seat door. The voice (intention communication action) is analyzed by the wearable device 4, and the vehicle operation is performed in the same manner as the first embodiment. Here, only the driver seat door is unlocked. In the same manner as the first embodiment, the vehicle operation is not limited to only unlocking of the driver seat door. The vehicle operation may be, for example, the unlocking of the front doors that include the driver seat door and a passenger seat door, the unlocking of the trunk, and the unlocking of all of the vehicle doors. The vehicle operation is not limited to only the unlocking of the vehicle door and may be a different vehicle operation.

As described above, the second embodiment has the following advantages.
(10) The operation of the vehicle 3 is limited to intention communication actions performed in the communication area AR (smart vehicle exterior area) formed by the polling signal 11 of an LF band. Thus, the electronic key 2 does not perform unnecessary communication action outside the range allowing for communication with the vehicle 3. Further, this allows the user to easily understand a timing for performing an intention communication action to request for a vehicle operation.
(11) When the user enters the communication area AR, the wearable device 4 issues the message A2 that requests for permission of a vehicle operation. Thus, as long as the user does not permit a vehicle operation (i.e., as long as user does not perform an intention communication action), the vehicle operation is not performed. This improves the security.
(12) Only vehicle operations selected by the user are performed.

Each of the above embodiments may be modified as described below.

Intention communication actions and vehicle operations may be associated with one another in each of a plurality of wearable devices 4. This configuration allows the user to select a desired vehicle operation with one of a plurality of wearable devices 4 such as smart glasses, a smart watch, and a smart ring.

Intention communication actions and vehicle operations may be associated with one another in a cloud computer (server). In this case, the registration of a vehicle operation to the cloud computer (association with intention communication action) may be performed with an application of the wearable device 4. In this configuration, a vehicle operation can be performed with an intention communication action that is the same for each of the wearable devices 4.

The device is not limited to the vehicle 3. Further, the electronic key 2 only needs to be a wireless key that can perform wireless communication and is not limited to a vehicle key. Other examples of the device include a building door device, an illumination device, an electronic appliance, and the like. That is, the electronic key system of each of the above embodiments and each modified example is applicable to various devices that perform a device operation after authentication of the electronic key 2.

The electronic key 2 of the first embodiment does not have to include the lock button 24, the unlock button 25, and the LF reception circuit 22.

The electronic key 2 of the second embodiment does not have to include the lock button 24 and the unlock button 25.

Although not particularly mentioned in each of the above embodiments, the microcomputer 21 of the electronic key 2 can be realized by a versatile processor. The processor is coupled to a memory 21A (refer to Fig. 1) that stores an instruction (program) executable by the processor. The processor executes an instruction to request the vehicle 3 to perform a vehicle operation (device operation) through communication with the wearable device 4. Thus, the present disclosure includes the following technical concepts of the electronic key 2.

### Embodiment 1

An electronic key (2) including:
an electronic key processor (21) that is authenticatable by a device (3) that is subject to operation;
a transmission circuit (23) capable of transmitting a wireless signal to the device (3);
a transceiver (26) capable of communicating with a wearable device (4) that is wearable by a user; and
a memory (21A) coupled to the processor (21) and configured to store an instruction that is executable by the processor (21), wherein
execution of the instruction allows the processor (21) to function to:
   receive a function ID corresponding to an intention communication action of a user recognized by the wearable device (4) with the transceiver (26); and
   transmit a control signal (14) including an operation code, which requests for a device operation indicated by the function ID, and an electronic key ID, which is used to authenticate the electronic key (2), from the transmission circuit (23) to the device (3).

### Embodiment 2

The electronic key (2) according to embodiment 1, further including:
a reception circuit (22) capable of receiving a wireless signal from the device (3), wherein execution of the instruction allows the processor (21) to further function to:
   determine whether or not to receive a polling signal (11) from the device (3); transmit a response signal (12) from the transmission circuit (23) to the device (3) when the reception circuit (22) receives the polling signal;
   notify the wearable device (4) that the user has entered a communication area (AR) formed by the polling signal; and
   receive the function ID from the wearable device after notifying the user of entry into the communication area.

Although not mentioned in each of the above embodiments, the verification ECU 31 of the vehicle 3 (device) includes a processor and a memory in the same manner as the electronic key 2. The processor of the verification ECU 31 performs the security control and device control by executing an instruction stored in the memory.

## Claims

1. An electronic key system comprising:
a device that is subject to operation;
an electronic key that is authenticatable by the device; and
a wearable device that is wearable by a user, wherein
the wearable device is capable of recognizing an intention communication action of the user, and
the device is configured to authenticate the electronic key and permit a device operation associated with the intention communication action of the user recognized by the wearable device.

2. The electronic key system according to claim 1, wherein the wearable device is configured to transmit, to the electronic key, identification information of the device operation corresponding to the intention communication action when the wearable device recognizes the intention communication action of the user.

3. The electronic key system according to claim 2, wherein the electronic key is configured to execute an interruption process and request the device to perform the device operation indicated by the identification information when the electronic key obtains the identification information of the device operation from the wearable device.

4. The electronic key system according to claim 3, wherein the electronic key is configured to execute the interruption process to transmit, to the device, a control signal including a request of the device operation indicated by the identification information when the electronic key obtains the identification information of the device operation from the wearable device.

5. The electronic key system according to one of claims 1 to 4, wherein
the device is configured to transmit a polling signal to form a communication area, and
the electronic key is configured to notify the wearable device that the user has entered the communication area when the electronic key receives the polling signal.

6. The electronic key system according to claim 5, wherein the wearable device is configured to issue a message that requests for permission of the device operation when the wearable device is notified that the user has entered the communication area.

7. The electronic key system according to claim 6, wherein the wearable device is configured to request with the message for selection of the device operation that is to be permitted when the wearable device is notified that the user has entered the communication area.
